# EUROPEAN PATENT SPECIFICATION

(11) **EP 0 570 200 B1**
(45) Date of publication and mention of the grant of the patent: **04.09.1996**
(21) Application number: 93303651.9
(22) Date of filing: 12.05.1993
(51) Int. Cl.: B60B 3/14

(54) **Wheel**
Rad
Roue

(30) Priority: 15.05.1992 GB 9210416
(43) Date of publication of application: 18.11.1993
(73) Proprietor: C L MANAGEMENT SERVICES LIMITED, Wendover, Buckinghamshire HP22 6EB (GB)
(72) Inventor: Salvadori, Georgina Pierina, Hatfield, Hertfordshire, AL10 9LD (GB)
(74) Representative: Smith, Gillian Ruth

(56) References cited:
- DE-A- 3 442 443
- FR-A- 2 290 317
- US-A- 3 459 455
- US-A- 3 869 174
- US-A- 3 871 708

## Description

This invention relates to wheels, more particularly to emergency spare wheels which can be fitted without modification to most vehicles, for example cars and light vans.

Wheels are generally attached to motor vehicles by means of mounting bolts or studs passing through several circular-shaped holes in the wheels. These holes are in general equispaced about the centre of the wheel. The wheels are fastened for example by nuts attached to said bolts. The bolts can be integral with and protrude from a vehicle hub, but more commonly are detachable and protrude through bolt holes on the vehicle hub.

The arrangement or configuration of bolts or bolt holes on different vehicle hubs is not uniform. Thus, there are examples of three, four or five bolt configurations which generally form the shape of an equilateral triangle, a square or a regular pentagon respectively. The dimensions of such configurations can also vary between different types of vehicle. For this reason spare wheels have hitherto been designed to fit specific vehicle types, that is the configuration of circular-shaped holes on a spare wheel must correspond to the particular configuration of bolts or bolt holes on the specific vehicle hub. It has been possible to accommodate variations in the pitch circle diameter of the bolts (US 3459455) but variations in the configuration, i.e. number, of mounting bolts cannot be accommodated. US 3459455 from which the features of the first part of claim 1 are known discloses an arrangement wherein an adapter plate is used as an intermediate member between the vehicle hub and the nave plate of the wheel. However, the arrangement is such that the number of elongate slots corresponds exactly to the number of mounting bolts available on the vehicle hub.

A wheel has now been invented which makes it possible to change a damaged or punctured wheel without the need to have available a complete specific wheel especially designed to fit the vehicle.

The present invention provides a wheel comprising the features as defined in claim 1.

The nave plate may be formed in one piece with the rim but more suitably is for example welded to the wheel rim. The nave plate is generally of annular shape in order to receive the central portion or inner dish. The detachable inner dish may be fastened to the nave plate by means of bolts passing through corresponding holes formed in both the nave plate and the central or inner dish and secured together by means of nuts attached to said bolts.

The particular advantage of this arrangement is that any number of inner dishes can be designed, each with a different arrangement of slots for fitting to different vehicle types, said inner dishes being alternatively attachable to any one example of a wheel. Thus, this arrangement obviates the need to design complete specific wheels for fitting to different vehicle types. It is only necessary to design different inner dishes, all of which can be separately attached to one standard design of wheel having a wheel rim and a suitable receiving nave plate.

The plurality of slots are formed and arranged on the inner dish so as to be fitted to a variety of motor vehicles.

Suitably the slots are elongate and extend radially from the centre of the inner dish. The elongate slots can be machined or stamped into the central area of the inner dish.

The slots are located at varying angular displacements to one another around the inner dish and preferably are disposed symmetrically about a diameter of the inner dish. It is possible to design an inner dish to fit each of the most common bolt configurations.

In the case of a three bolt configuration, the slots are suitably positioned in the shape of an equilateral triangle; that is, they are disposed at angular spacings of 120° to one another.

In the case of a four bolt configuration, the slots are suitably positioned in the shape of a square; that is, they are disposed at angular spacings of 90° to one another.

In the case of a five bolt configuration, the slots are suitably positioned in the shape of a regular pentagon; that is, they are disposed at angular spacings of 72° to one another.

Four and five bolt configurations on vehicle hubs are most common, and therefore in a preferred embodiment a single inner dish comprises sufficient elongate slots to fit both such configurations.

Particularly, one slot for both such configurations on the same inner dish shares a common position.

The advantage in having the elongate slots extending radially is that any variance in pitch circle diameter of the centres of the bolts or bolt holes of a given hub is accommodated by the length of the slots. Thus, the inner dish is automatically centered equally about the pitch circles of the mounting bolts.

The invention also provides a central portion for securing to a wheel hub and a nave plate as described above. The central portion can be formed with slots for fitting to a specific vehicle type or more preferably is formed with slots as described above for fitting to a variety of vehicle types.

An embodiment of the invention will now be described in detail below with reference to the accompanying drawings, wherein:

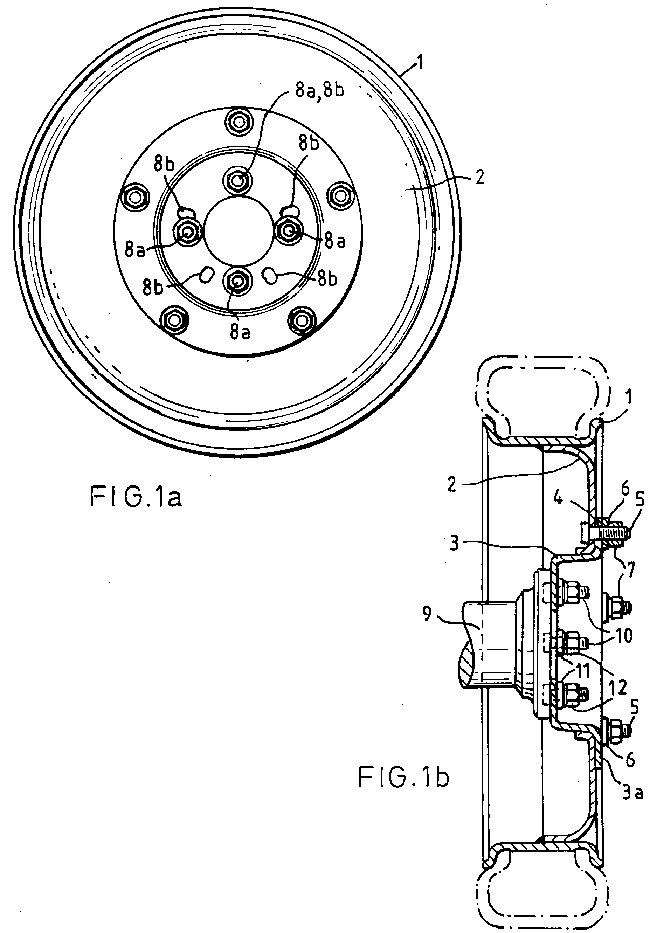

Figure 1a shows a plan view of a wheel mounted by four mounting bolts onto a wheel hub; and
Figure 1b shows the wheel of Figure 1a in cross-section.

In Figures 1a and 1b, a wheel is shown comprising a wheel rim 1 to which is welded a domed steel annular dish also known as a nave plate 2. Attached to the nave plate 2 is a detachable central portion or inner dish 3 which is commonly a metal spinning or pressing having a flange 3a at its open outer face. The flange 3a has five symmetrically disposed holes 4 which correspond to holes in the nave plate 2 through which pass securing bolts 5 which engage with washers 6 and nuts 7 to releasably secure the inner dish 3 to the nave plate 2.

In the inner dish 3, eight elongate slots 8a,8b extending radially from the centre are symmetrically disposed about a diameter of the inner dish. Four of the slots 8a are positioned at angular spacings of 90° from one another and five of the slots 8b are positioned at angular spacings of 72° from one another. One slot 8a,8b shares a common position for accommodating configurations of both four and five mounting bolts.

In Figure 1, a vehicle hub 9 is shown comprising four bolt holes through which protrude four bolts 10 or studs. These bolts 10 engage four symmetrically disposed elongate slots 8a and are secured to the inner dish by washers and nuts.

For a five stud configuration, five protruding bolts 10 could be readily secured to the give symmetrically disposed elongate slots 8b in a similar manner as that described for the four bolt configuration.

## Claims

1. A wheel having a wheel rim (1), a nave plate (2) extending radially inwardly therefrom, and a central portion (3) having a plurality of slots (8a,8b) to receive mounting bolts (10) so as to secure the wheel to a vehicle hub (9), said central portion (3) being detachably secured to the nave plate (2), characterised in that said central portion (3) is located radially inwardly of the nave plate (2) to form an intermediate member securable on the one hand by said mounting bolts (10) to said vehicle hub (9) and on the other hand by means of separate fixing means (5 and 7) to said nave plate (2), whereby said central portion (3) is replaceable by an alternative one having a different arrangement of said plurality of slots so as to accommodate wheel hubs having different configurations of mounting bolts which cannot be accommodated by the first central portion (3).

2. A wheel according to claim 1, wherein the slots (8a,8b) are elongate and extend radially from the centre of the central portion (3).

3. A wheel according to claim 1 or 2, wherein the slots (8a,8b) are disposed symmetrically about a diameter of the central portion (3).

4. A wheel according to claim 3, wherein three slots are disposed at angular spacings of 120° to one another so as to accommodate a wheel hub (9) having a configuration of three mounting bolts (10).

5. A wheel according to claim 3, wherein four slots (8a) are disposed at angular spacings of 90° to one another so as to accommodate a wheel hub (9) having a configuration of four mounting bolts (10).

6. A wheel according to claim 3, wherein five slots (8b) are disposed at angular spacings of 72° to one another so as to accommodate a wheel hub (9) having a configuration of five mounting bolts (10).

7. A wheel according to claims 5 and 6, wherein the slots (8a,8b) are arranged to accommodate wheel hubs (9) having either four of five mounting bolts (10).

8. A wheel according to claim 7, wherein one slot (8a,8b) for both configurations shares a common position.

9. A central portion for securing to a wheel hub (9) and a nave plate (2) as defined in any one of claims 1 to 8.

## Patentansprüche

1. Rad, das eine Radfelge (1), eine Radschüsselplatte (2), die von diesem in Radialrichtung nach innen verläuft, und einen Mittelabschnitt (3) hat, der eine Vielzahl von Schlitzen (8a, 8b) zur Aufnahme von Radmutterbolzen (10) hat, um so das Rad an einer Fahrzeugnabe (9) zu befestigen, wobei der Mittelabschnitt (3) abnehmbar an der Radschüsselplatte (2) befestigt ist, dadurch gekennzeichnet, daß der Mittelabschnitt (3) von der Radschüsselplatte (2) in Radialrichtung nach innen angeordnet ist, um ein Zwischenelement zu bilden, das einerseits durch die Radmutternbolzen (10) an der Fahrzeugnabe (9) und andererseits mit Hilfe gesonderter Befestigungsmittel (5 und 7) an der Radschüsselplatte (2) befestigt werden kann, wodurch der Mittelabschnitt (3) durch einen anderen ersetzt werden kann, der eine unterschiedliche Anordnung der Vielzahl von Schlitzen aufweist, um so an Radnaben angepaßt werden zu können, die unterschiedliche Konfigurationen von Radmutterbolzen haben, an die der erste Mittelabschnitt (3) nicht angepaßt werden kann.

2. Rad nach Anspruch 1, bei dem die Schlitze (8a, 8b) länglich sind und sich von der Mitte des Mittelabschnitts (3) aus in Radialrichtung erstrecken.

3. Rad nach Anspruch 1 oder 2, bei dem die Schlitze (8a, 8b) symmetrisch um einen Durchmesser des Mittelabschnitts (3) angeordnet sind.

4. Rad nach Anspruch 3, bei dem drei Schlitze in einem Winkelabstand von 120° zueinander angeordnet sind, um so an eine Radnabe (9) angepaßt zu werden, die eine Konfiguration von drei Radmutterbolzen (10) hat.

5. Rad nach Anspruch 3, bei dem vier Schlitze (8a) in einem Winkelabstand von 90° zueinander angeordnet sind, um so an eine Radnabe (9) angepaßt zu werden, die eine Konfiguration von vier Radmutterbolzen (10) hat.

6. Rad nach Anspruch 3, bei dem fünf Schlitze (8b) in einem Winkelabstand von 72° zueinander angeordnet sind, um so an eine Radnabe (9) angepaßt zu werden, die eine Konfiguration von fünf Radmutterbolzen (10) hat.

7. Rad nach den Ansprüchen 5 und 6, bei dem die Schlitze (8a, 8b) so angeordnet sind, daß sie an Radnaben (9) angepaßt werden können, die entweder vier oder fünf Radmutterbolzen (10) haben.

8. Rad nach Anspruch 7, bei dem ein Schlitz (8a, 8b) für beide Konfigurationen eine gemeinsame Position einnimmt.

9. Mittelabschnitt zur Befestigung an einer Radnabe (9) und einer Radschüsselplatte (2) gemäß der Definition in einem der Ansprüche 1 bis 8.

## Revendications

1. Roue comprenant une jante (1), un disque (2) s'étendant radialement vers l'intérieur de celle-ci, et une partie centrale (3) comportant plusieurs fentes (8a, 8b) destinées à recevoir des boulons de montage (10) pour fixer la roue au moyeu d'un véhicule (9), ladite partie centrale (3) étant fixée de façon amovible au disque (2), caractérisée en ce que ladite partie centrale (3) est située radialement vers l'intérieur du disque (2) pour former un élément intermédiaire pouvant être fixé d'une part par lesdits boulons de montage (10) audit moyeu du véhicule (9) et d'autre part par l'intermédiaire de moyens de fixation séparés (5 et 7) audit disque (2), ladite partie centrale (3) pouvant ainsi être remplacée par une autre partie à agencement différent desdites plusieurs fentes, en vue de l'adaptation à des moyeux de roue ayant différentes configurations des boulons de montage, non adaptées à la première partie centrale (3).

2. Roue selon la revendication 1, dans laquelle les fentes (8a, 8b) sont allongées et s'étendent radialement à partir du centre de la partie centrale (3).

3. Roue selon les revendications 1 ou 2, dans laquelle les fentes (8a, 8b) sont agencées symétriquement autour d'un diamètre de la partie centrale (3).

4. Roue selon la revendication 3, dans laquelle trois fentes sont agencées à des espacements angulaires de 120°, en vue de l'adaptation à un moyeu de roue (9) ayant une configuration à trois boulons de montage (10).

5. Roue selon la revendication 3, dans laquelle quatre fentes (8a) sont agencées à des espacements angulaires de 90°, en vue de l'adaptation à un moyeu de roue (9) ayant une configuration à quatre boulons de montage (10).

6. Roue selon la revendication 3, dans laquelle cinq fentes (8b) sont agencées à des espacements angulaires de 72°, en vue de l'adaptation à un moyeu de roue (9) ayant une configuration à cinq boulons de montage (10).

7. Roue selon les revendications 5 et 6, dans laquelle les fentes (8a, 8b) sont agencées de sorte à permettre l'adaptation à des moyeux de roue (9) comportant ou bien quatre ou bien cinq boulons de montage (10).

8. Roue selon la revendication 7, dans laquelle une fente (8a, 8b) pour les deux configurations partage une position commune.

9. Partie centrale pour la fixation à un moyeu de roue (9) et à un disque (2) comme définie dans l'une quelconque des revendications 1 à 8.
